# EUROPEAN PATENT SPECIFICATION

(11) **EP 4 249 317 B1**
(45) Date of publication and mention of the grant of the patent: **04.09.2024**
(21) Application number: 23158583.7
(22) Date of filing: 24.02.2023
(51) Int. Cl.: B60L 53/16, B60L 53/65, B60L 53/66, B60R 25/01, H01R 13/639, B60L 58/12, B60L 55/00

(54) **SMART LOCK CONTROLLING METHOD OF CHARGING GUN OF ELECTRIC VEHICLE, DEVICE AND STORAGE MEDIUM THEREOF**
STEUERUNGSVERFAHREN FÜR INTELLIGENTEN VERSCHLUSS EINER LADEPISTOLE EINES ELEKTROFAHRZEUGS, VORRICHTUNG UND SPEICHERMEDIUM DAFÜR
PROCÉDÉ DE COMMANDE DE VERROUILLAGE INTELLIGENT DE PISTOLET DE CHARGE DE VÉHICULE ÉLECTRIQUE, DISPOSITIF ET SUPPORT DE STOCKAGE ASSOCIÉS

(30) Priority: 24.03.2022 CN 202210292968
(43) Date of publication of application: 27.09.2023
(73) Proprietor: Changan New Energy Nanjing Research Institute Co., Ltd., Nanjing City, Jiangsu Province 211200 (CN)
(72) Inventor: ZENG, Hongxia, Chongqing, 401133 (CN); YANG, Guanlong, Chongqing, 401133 (CN); YAN, Qinshan, Chongqing, 401133 (CN)
(74) Representative: 2K Patentanwälte Blasberg Kewitz & Reichel

(56) References cited:
- CN-A- 102 882 070
- CN-A- 106 602 639
- JP-A- 2015 023 747
- US-A1- 2014 167 695
- US-B2- 8 736 225

## Description

### TECHNICAL FIELD

The disclosure belongs to the technical field of an electric vehicle, particularly to a smart lock control of a charging gun of an electric vehicle.

### BACKGROUND

The increasingly serious energy crisis and environmental pollution, as well as the development of intelligent technology, enable electric vehicles to be the inevitable choice for the transformation of automobile industry.

In order to prevent the charging/discharging gun from being stolen during alternative current charging/discharging of electric vehicles, the vehicle controller usually controls the electronic lock to be locked after inserting the charging/discharging gun and unlocks the electronic lock through a key/manual unlocking the door after charging/discharging.

For example, a Chinese patent application of the publication number CN108099644A entitled "Electric vehicle and charging gun anti-theft control system and method" provides an anti-theft control method of a charging gun for electric vehicles, which includes: determining whether the charging gun is inserted into the charging socket of the electric vehicle by detecting to obtain a charging confirmation signal; if yes, sending a locking command to control the electronic lock to lock so as to restrict the charging gun from being pulled out of the charging socket; controlling the charging gun to stop charging according to the unlocking command sent by the user; determining whether the charging gun stops charging or not, if yes, controlling the electronic lock to unlock so as to realize that the charging gun may be pulled out from the charging socket. The electronic lock may be controlled to be locked when the charging gun is inserted into the charging socket, and the charging may be stopped and the charging gun may be pulled out only when the user sends an unlocking command. A Chinese patent application of the publication number CN1 10626193A entitled "Control method, device and system of charging gun electronic lock" provides a controlling method of an electronic lock of a charging gun. A first unlocking request signal is used for unlocking the door, when the first unlocking request signal is obtained, it can be regarded as that a user may have a demand for stopping charging and unlocking the electronic lock of the charging gun. A second unlocking request signal may be generated according to the first unlocking request signal, and the second unlocking request signal is used for unlocking the electronic lock of the charging gun. Next, a charging stopping command is generated according to the second unlocking request signal, and a communication control unit of the electric vehicle is controlled to stop charging and unlock the electronic lock of the charging gun according to the charging stopping command. By means of the method, an electric vehicle end actively stops charging according to the demand of the user, the electronic lock of the charging gun is unlocked to pull out the charging gun so that a control over stopping charging, unlocking the charging gun electronic lock and the like is more convenient and faster, and the user experience is improved.

The conventional electronic lock controlling method does not consider the charging scene, which enables it to be impossible to unplug the charging gun at the public alternative current charging pile when the vehicle is fully charged or the temperature of the vehicle charging port is too high to charge, thus causing the vacancy of the public charging pile resources. There is a risk that the charging gun will be stolen without pulling out the charging gun and locking it twice after manually unlocking the electronic lock in the scene of alternative current home charging or private charging pile charging. In addition, when the vehicle is discharged, the conventional electronic lock controlling method may not intelligently identify the demand of electronic lock unlocking according to the scene, and there will be redundant electronic lock unlocking operation, thus shortening the duration life of electronic lock.

US20140167695A1 discloses a lock device locks a locking subject to a power port. The lock device is provided with a lock mechanism including a lock member that is movable between a lock position and an unlock position. A location registration unit registers, as a registered location, a location where switching of the locking subject between a lock state and an unlock state is prohibited or permitted. A location acquisition unit acquires a present location of the lock device. A switching control unit compares the present location with the registered location and controls the lock mechanism based on the comparison to switch the locking subject between the lock state and the unlock state.

CN106602639A discloses an intelligent charging system of electric vehicle. The system comprises an electric control locking mechanism, an electronic remote control unit, a collection unit, an execution unit and a main control unit; the electric control locking mechanism locks/unlocks a charging gun according to an instruction of the main control unit; the electronic remote control unit collects a vehicle door locking/unlocking signal of a user; the collection unit collects temperature information of a charging socket position of a vehicle during charging; the execution unit pops the charging gun out of a charging port according to an instruction of the main control unit; and after receiving the vehicle door locking/unlocking signal from the electronic remote control unit, the main control unit controls motion of the electric control locking mechanism to lock/unlock the charging gun. A preset temperature value is stored in the main control unit, the main control unit obtains the temperature information of the charging socket position of the vehicle via the collection unit, and compares the collected temperature value with the preset temperature value; and when the collected temperature value is greater than the preset temperature value, the main control unit controls motion of the execution mechanism so that the charging gun is popped out of the charging port.

JP2015023747A discloses a charging system for charging an on-vehicle battery by the power from either a personal or shared charging cable, the personal charging cable is provided with a circuit for transmitting a collation signal. The shared charging cable is not provided with a circuit for transmitting a collation signal. A control device (ECU) of a vehicle determines whether or not the charging cable connected to the vehicle is a personal charging cable based on the presence/absence of a collation signal from the charging cable. When the charging cable connected to the vehicle is a personal charging cable, the ECU locks the charging cable at all times, and when the charging cable connected to the vehicle is a shared charging cable, the ECU locks the charging cable until charging is completed, and unlocks the charging cable after charging is completed.

### SUMMARY

The disclosure determines an unlocking and locking requirement of an electronic lock according to different scenes, thereby prolonging a duration life of the electronic lock, reducing a vacancy of public alternative current charging pile resources, and improving users' experience while preventing theft of the alternative current charging gun. Combined with a connection state of the alternative current charging gun, a temperature of a charging port of a vehicle, a state of an electronic lock and users' operation and so on, a charging/discharging scene of user is identified, an unlocking demand of electronic lock is determined, and the electronic lock of charging port is controlled to be unlocked/locked.

The disclosure provides a smart lock controlling method of the charging gun of the electric vehicle, which includes: automatically identifying a charging and discharging of a vehicle according to a lock state, a connection state of an alternative current gun, an automatic unlock function setting after full charge and other signals, identifying the vehicle as an alternative current charging scene of private charging pile or an alternative current charging scene of public charging pile according to a charging state and the lock state, identifying and determining a scene when people use a discharging gun near the vehicle or a scene when people use the discharging gun far away from the vehicle according to a discharging state and the lock state: performing a real-time detection of a temperature of a charging/discharging port of the vehicle, when the temperature reaches a preset maximum working temperature of the charging/discharging port, determining an unlocking requirement according to different charging and discharging scenes.

The disclosure provides a smart lock controlling method of the charging gun of the electric vehicle, which includes: monitoring, via a charging controller, a state of a charging gun, a state of a discharging gun, a battery state of a battery of the electric vehicle, and an automatic unlocking function setting and a state of a driver door lock in real time when an alternative current charging gun is inserted into a charging port of the electric vehicle; determining, via a recognition module, a current charging scene according to the state of the charging gun and the automatic unlocking function setting of a smart lock of the charging gun after the battery is fully charged; identifying and determining, via the recognition module, a current discharging scene according to the state of the discharging gun and the state of the driver door lock; detecting, via a temperature detection module, a current temperature of the charging port or of a discharging port of the electric vehicle in real time; and sending, via the charging controller, a corresponding unlocking mode command to the smart lock of the charging gun according to the current temperature, the current charging scene and the current discharging scene. Wherein determining the current discharging scene includes: detecting, via the recognition module, the state of the discharging gun when the alternative current charging gun is inserted into the charging port, if the state of the discharging gun is "fully connected", further determining the state of the driver door lock , if the state of the driver door lock is "unlocked", the current charging scene is determined as a first discharging scene, if the recognition module detecting that the state of the discharging gun is "fully connected" and the state of the driver door lock is "locked", the current discharging scene is determined as a second discharging scene

In an embodiment of the disclosure, determining the current charging scene includes: detecting, via the recognition module of the charging controller, a state of the alternative current charging gun inserted into the charging port of the vehicle, wherein, if the state of the alternative current charging gun is "fully connected", the charging gun charges the vehicle, and after the charging controller receives a full-charged signal, if the recognition module recognizes that the automatic unlocking function setting of the smart lock of the charging gun is a closed state, the current charging scene is determined as a first charging scene; and if the recognition module detects that the state of the alternative current charging gun is "fully connected", and the automatic unlocking setting of the smart lock of the charging gun being in an open state after receiving the full-charged signal, the current charging scene is determined as a second charging scene.

In an embodiment of the disclosure, when the temperature detection module detects that the temperature of the charging port is lower than or equal to a maximum charging threshold, if the current charging scene is the first charging scene, the charging controller sends a key unlocking command and a manual unlocking command as a current unlocking mode of the smart lock, if the current charging scene is the second charging scene, the charging controller sends the key unlocking command and the manual unlocking command as the current unlocking mode of the smart lock if not full-charged, and sends an automatic unlocking command as the current unlocking mode of the smart lock if full-charged; or if the current charging scene is the second discharging scene or the first discharging scene, the charging controller sends the key unlocking command and manual unlocking command as the current unlocking mode of the smart lock.

In an embodiment of the disclosure, the temperature detection module detects that the temperature of the charging port is higher than the maximum charging threshold, and when the recognition module identifies and determines that a current charging state of the vehicle is in the first charging scene, the second charging scene, the first discharging scene and the second discharging scene, the charging controller sends the automatic unlocking command as the current unlocking mode of the smart lock.

In an embodiment of the disclosure, when the recognition module identifies and determines that the current charging state of the vehicle is in the first charging scene, the charging controller sends an automatic locking command, a key locking command, and a secondary locking command to lock the charging gun at the charging port if charging gun is still in the full-connected state within a predetermined time after an automatic unlocking. , when the recognition module identifies and determines that the current charging state of the vehicle is in the second charging scene or the second discharging scene, the charging controller sends an automatic locking command and a key locking command as the current locking mode of the smart lock.

The disclosure further provides a smart lock controlling device of a charging gun of an electric vehicle, which includes: a charging controller, a recognition module and a temperature detection module, wherein the smart lock controlling device is adapted to perform the smart lock controlling method mentioned above, when the temperature detection module detects that the temperature of the charging port is lower than a maximum charging threshold, if the current charging scene is the first charging scene, the charging controller sends a key unlocking command and a manual unlocking command as a current unlocking mode of the smart lock, if the current charging scene is the second charging scene, the charging controller sends the key unlocking command, the manual unlocking command and a full-charged automatic unlocking command as the current unlocking mode of the smart lock;

if the current charging scene is the second discharging scene, the charging controller sends the key unlocking command and manual unlocking command as the current unlocking mode of the smart lock, the temperature detection module detects that the temperature of the charging port is higher than the maximum charging threshold, and the charging controller sends the automatic unlocking command as the current unlocking mode of the smart lock.

In an embodiment of the disclosure, the recognition module of the charging controller detects a state of the alternative current charging gun inserted into the charging port of the vehicle, if it is "fully connected", the charging gun charges the vehicle, and after the charging controller receives a full-charged signal, if the recognition module recognizes that the automatic unlocking function setting of the smart lock of the charging gun is a closed state, it is determined as a first charging scene;

the recognition module detects that the state of the alternative current charging gun is "fully connected", a request of the automatic unlocking setting of the smart lock of the charging gun is in an open state after receiving the full-charged signal, and determine a second charging scene;

the recognition module detects the state of the discharging gun when the alternative current charging gun is inserted into the charging port, if the state of the discharging gun is "fully connected", the recognition module further determines the state of the driver door lock, if the state of the driver door lock is "unlocked", the recognition module determines a first discharging scene, if the recognition module detects that the state of the discharging gun is "fully connected" and the state of the driver door lock is "locked", the recognition module determines a second discharging scene.

In an embodiment of the disclosure, when the recognition module identifies and determines that a current charging state of the vehicle is in the first charging scene, the charging controller sends, an automatic locking command, a key locking command, and a secondary locking command to lock the charging gun at the charging port if charging gun is still in the full-connected state within a predetermined time after an automatic unlocking, as a current locking mode of the smart lock,,
when the recognition module identifies and determines that the current charging state of the vehicle is in the second charging scene and the second discharging scene, the charging controller sends a command to insert the charging gun into the charging port, and after the charging port is fully connected, an automatic locking of the smart lock and a key locking are set as the current locking mode of the smart lock.

The disclosure further provides an electronic device includes a processor and a memory. Wherein, the processor and the memory is adapted to perform the smart lock controlling method of the charging gun of the electric vehicle.

The disclosure further provides a computer readable storage medium. A computer program is store on it, which may be loaded and run by the smart lock controlling device to execute the smart lock controlling method of the charging gun of the electric vehicle.

The disclosure may reduce a phenomenon that the public alternative current charging pile resource is in short supply but the vacancy rate is high, which prevents the alternative current charging gun from being stolen, reduces the users' operation, improves the users' experience and prolong the duration life of the electronic lock.

### BRIEF DESCRIPTION OF THE DRAWINGS

FIG. 1 is a schematic view of a recognition of a charging scene of a vehicle.
FIG. 2 is a schematic view of a recognition of a discharging scene of the vehicle.
FIG. 3 is a schematic view of a recognition of an unlocking requirement of an electronic lock.
FIG. 4 is a schematic view of a recognition of a locking requirement of the electronic lock.

### DETAILED DESCRIPTION

In order to enable the technical problems, technical solutions and advantages to be solved by the disclosure to be clearer, the disclosure will be described in detail with reference to the accompanying drawings and specific embodiments. Specific details, such as specific configurations and components, are provided in the following description only to aid a comprehensive understanding of embodiments of the disclosure. Therefore, it should be apparent to those skilled in the art that various changes and modifications may be made to the embodiments described herein without departing from the scope of the disclosure. In addition, the description of conventional functions and constructions is omitted for clarity and conciseness. It should be understood that the embodiments are intended to illustrate the disclosure only and not to limit the scope of the disclosure.

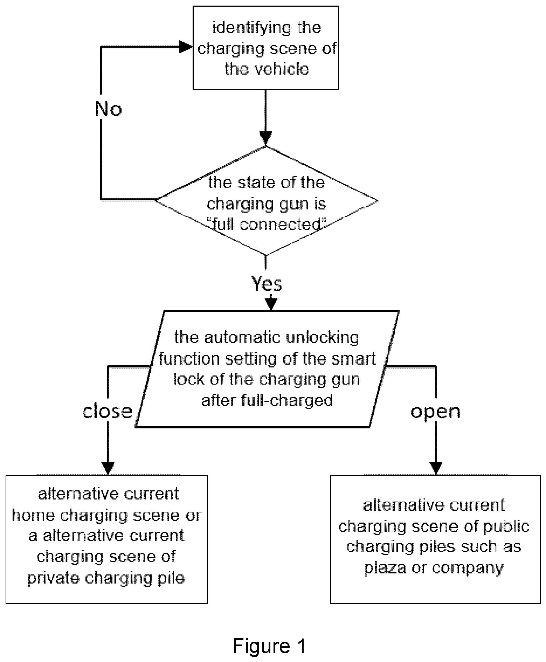

Please refer to FIG. 1. FIG. 1 is a schematic view of a recognition of a charging scene of a vehicle. The vehicle is identified as a first (private charging pile alternative current) charging scene or a second (public charging pile alternative current) charging scene according to a charging state of the vehicle.

When an alternative current charging gun is inserted into a charging port, the recognition module of the charging controller detects a state of the alternative current charging gun, if it is "fully connected", the charging gun charges the vehicle. After being fully charged, the charging gun sends a full-charged signal. After the charging controller receives the full-charged signal, the recognition module further determines the automatic unlocking function setting of the smart lock of the charging gun, if it is a closed state, it is determined as a first charging scene (which means an alternative current home charging scene or an alternative current charging scene of private charging pile). When the charging gun charges the vehicle, if the state of the alternative current charging gun is "fully connected" and the recognition module determines that the automatic unlocking setting of the smart lock of the charging gun is in an open state after receiving the full-charged signal, it is determined as a second charging scene (which means alternative current charging scene of public charging piles such as plaza or company).

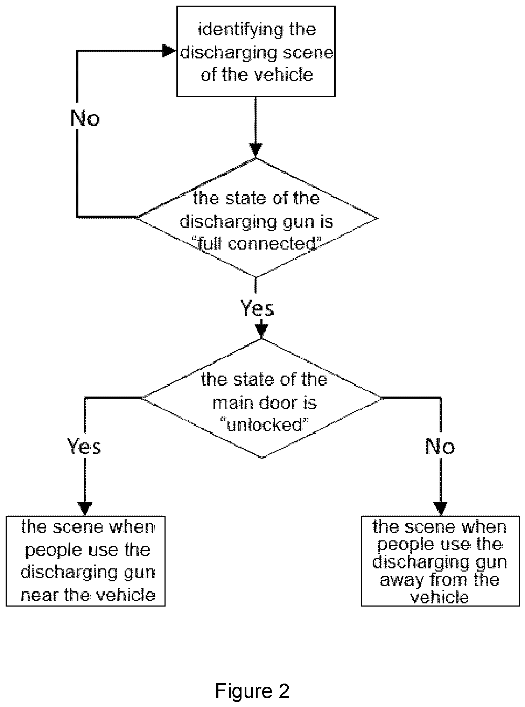

Please refer to FIG. 2. FIG. 2 is a schematic view of a recognition of a discharging scene of the vehicle. In a process of a vehicle charging and discharging, the scene is identified and determined according to a state of the discharging gun and a state of the driver door lock. When the alternative current charging gun is inserted into the charging port of the vehicle, the recognition module of the charging controller detects the state of the discharging gun. If the state of the discharging gun is "fully connected", the state of the driver door lock is further determined, if the state of the driver door lock is "unlocked", it is determined as a first discharging scene (which means a discharging scene for users near the vehicle). When the alternative current charging gun is inserted into the charging port of the vehicle, the recognition module of the charging controller detects the state of the discharging gun. If it is "fully connected" and the recognition module detects that the state of the driver door lock is "locked", it is determined as a second discharging scene (which means a discharging scene for users away from the discharging gun).

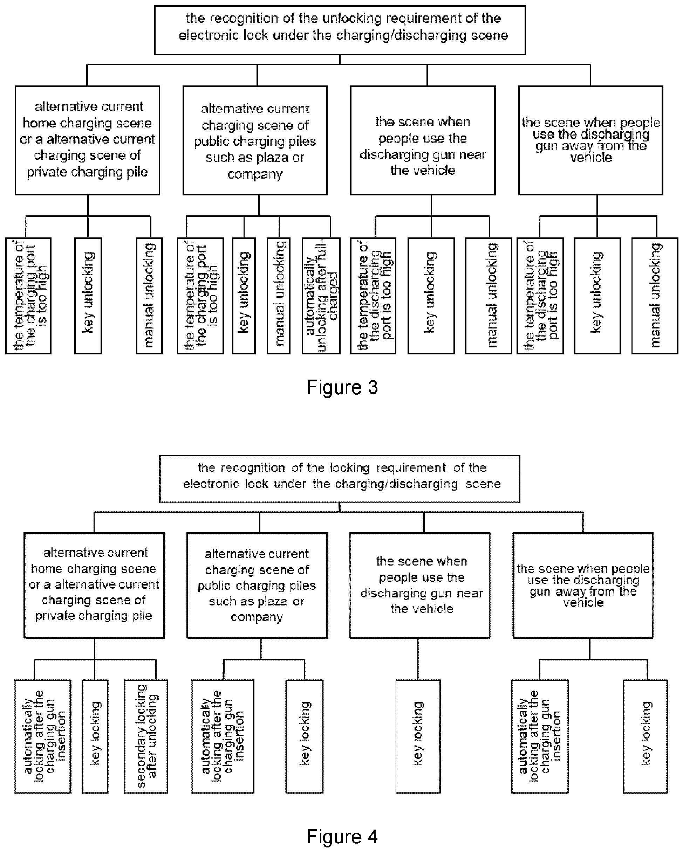

Please refer to FIG. 3. FIG. 3 is a schematic view of a recognition of an unlocking requirement of an electronic lock. The charging and discharging scene of the vehicle is identified and different unlocking modes are set according to different charging and discharging scenes and the temperatures of the charging port and a discharging port.

After the charging gun is inserted into the charging port of the vehicle, the temperature detection module detects the temperature of the charging port in real time. When the detected temperature of the charging port is higher than a maximum charging threshold, the unlocking mode in the first charging scene, the second charging scene, the first discharging scene and the second discharging scene is set as automatic unlocking, the charging controller sends an automatic unlocking command, and the charging gun is automatically unlocked.

When the charging controller determines that the current charging scene is the first charging scene and the temperature detection module detects that the temperature of the charging port is not higher than (lower than or equal to) a maximum charging threshold, a current unlocking mode of the smart lock (a vehicle charging/discharging electronic lock at an end of a charging/discharging socket) is set as a key unlocking and a manual unlocking. The charging controller sends a key unlocking command and manual unlocking command. And the charging gun may be unlocked by a key and a manual mode. When the charging controller determines that the current charging scene is the second charging scene and the temperature detection module detects that the temperature of the charging port is not higher than a maximum charging threshold, the current unlocking mode of the smart lock is set as the key unlocking, the manual unlocking and a full-charged automatic unlocking. The charging controller sends a key unlocking, the manual unlocking and a full-charged automatic unlocking command to the charging port. When a battery is not fully charged, the charging gun may be unlocked by the key and the manual mode. When the charging controller detects that the charging of the battery is completed, the charging controller sends an unlocking command so that charging gun is automatically unlocked, the charging gun can be taken out from the charging port of the vehicle.

When the charging controller determines that the current charging scene is the first discharging scene and the temperature detection module detects that the temperature of the discharging port is lower than or equal to a maximum charging threshold, the current unlocking mode of the smart lock is set as the key unlocking and the manual unlocking. The charging controller sends a key unlocking and the manual unlocking command. The charging gun may be unlocked by the key and the manual mode. The charging gun may not be unlocked under other conditions. When the charging controller determines that the current charging scene is the second discharging scene and the temperature detection module detects that the temperature of the discharging port is lower than or equal to a maximum charging threshold, the current unlocking mode of the smart lock is set as the key unlocking and the manual unlocking. The charging controller sends the key unlocking and the manual unlocking command. The charging gun may be unlocked by the key and the manual mode. The charging gun may not be unlocked under other conditions.

Please refer to FIG. 4. FIG. 4 is a schematic view of a recognition of a locking requirement of the electronic lock. When the charging controller determines that the current charging scene is the first charging scene, the current locking mode of the smart lock is set as an automatic locking after a charging gun insertion, a key locking and a secondary locking after unlocking. When the charging gun is inserted into the charging port, the charging controller recognizes that the charging gun is fully connected and sends an automatic locking command, which may also be a key locking command. If the electronic lock is unlocked manually or by key after the charging is completed, after reaching the predetermined time, the charging gun is not pulled out, a secondary locking command will be sent and the charging gun is locked at the charging port. When the recognition module identifies and determines that the current charging state of the vehicle is in the second charging scene and the second discharging scene, the locking mode of the smart lock is set as an automatic locking after a charging gun insertion and key locking. When the charging gun is inserted into the charging port, the charging controller recognizes that the charging gun is fully connected and sends an automatic locking command, which may also be a key locking command. When the recognition module identifies and determines that the current charging state of the vehicle is in the first discharging scene, the locking mode of the smart lock is the key locking, the smart lock may only be locked by the key.

The unlocking mode of the vehicle is set as the key unlocking and the manual unlocking. The charging controller sends the key unlocking command and manual unlocking command, then the charging gun can be unlocked by the key and the manual mode.

The recognition module identifies and determines which scene the charging state is in, including: the alternative current charging scene of private charging pile, the alternative current charging scene of public charging piles, a scene when people use the discharging gun near the vehicle, a scene when people use the discharging gun away from the vehicle. Under the above four scenes, the locking state of the smart lock is controlled, the temperatures of the charging/discharging port are detected in real time and the corresponding unlocking mode of the smart lock is set.

The alternative current charging scene of private charging pile: the state of the alternative current charging gun is "fully connected" and the automatic unlocking function setting is "off" after being fully charged. The alternative current charging scene of public charging piles: the state of the alternative current charging gun is "fully connected" and the automatic unlocking function setting is "on" after being fully charged. The scene when people use the discharging gun near the vehicle: the state of the discharging gun is "fully connected" and the door lock state is "unlocked". The scene when people use the discharging gun away from the vehicle: the state of the discharging gun is "fully connected" and the door lock state is "locked". According to different charging scenes, the temperature t of the charging/discharging port of the vehicle is detected in real time and compared with a preset working maximum temperature T of the charging/discharging port, if it approaches or reaches a highest temperature, it is determined that the temperature of the charging/discharging port is too high; otherwise, the temperature of the charging/discharging port is considered acceptable. In the alternative current charging scene of private charging pile or the alternative current charging scene of public charging piles, the alternative current charging gun is inserted and then the smart lock is automatic locked. The smart lock is automatically locked without pulling out the charging gun after unlocking smart lock by the key/manually for a certain time (e.g. 2s may be calibrated). In the alternative current charging scene of public charging piles such as plaza and company, after the alternative current charging gun is inserted, the smart lock is automatically locked. And the smart lock is automatically unlocked after fully charged. In the scene when people use the discharging gun near the vehicle, the smart lock is not locked after the charging gun is inserted. The smart lock is locked only after the person is detected to be away from the vehicle (the door lock state changes from open to closed). After locking, the key or the manual unlocking is required to unlock the smart lock. In the scene when people use the discharging gun away from the vehicle, the smart lock is locked automatically after the charging gun is inserted. After locking, the key or the manual unlocking is required to unlock the smart lock. In any scene, when the temperature of the charging/discharging port is too high, the smart lock will be automatically unlocked in a use scene of the charging gun and the discharging gun.

## Claims

1. A smart lock controlling method of an alternative current charging gun of an electric vehicle, comprising:
monitoring, via a charging controller, a state of the alternative current charging gun, a state of a discharging gun of the electric vehicle,
a battery state of a battery of the electric vehicle, and an automatic unlocking function setting and a state of driver door lock in real time when the alternative current charging gun is inserted into a charging port of the electric vehicle,
determining, via a recognition module, a current charging scene according to the state of the charging gun and the automatic unlocking function setting of a smart lock of the charging gun after the battery is fully charged,
identifying and determining, via the recognition module, a current discharging scene according to the state of the discharging gun and the state of driver door lock, and sending, via the charging controller, a corresponding unlocking mode command to the smart lock of the charging gun according to the current charging scene and the current discharging scene;
**characterized in that** the method further comprising:
detecting, via a temperature detection module, a current temperature of the charging port or of a discharging port of the electric vehicle in real time, and
sending, via the charging controller, a corresponding unlocking mode command to the smart lock of the charging gun according to the current temperature; wherein
determining the current charging scene comprises:
detecting, via the recognition module of the charging controller, a state of the alternative current charging gun inserted into the charging port of the vehicle, wherein, if the state of the alternative current charging gun is "fully connected",
which is defined as: when the charging gun is inserted into the charging port, the charging controller recognizes that the charging gun is fully connected and sends an automatic locking command; the charging gun charges the vehicle, and after the charging controller receives a full-charged signal, if the recognition module recognizes that the automatic unlocking function setting of the smart lock of the charging gun is a closed state, the current charging scene is determined as a first charging scene, and
if the recognition module detects that the state of the alternative current charging gun is "fully connected", and the automatic unlocking setting of the smart lock of the charging gun is in an open state after receiving the full-charged signal, the current charging scene is determined as a second charging scene;
determining the current discharging scene comprises:
detecting, via the recognition module, the state of the discharging gun when the alternative current charging gun is inserted into the charging port,
if the state of the discharging gun is connected, further determining the state of driver door lock,
if the state of driver door lock is "unlocked", the current discharging scene is determined as a first discharging scene, and
if the recognition module detects that the state of the discharging gun is connected and the state of driver door lock is "locked", the current discharging scene is determined as a second discharging scene;
when the temperature detection module detects that the temperature of the charging port is lower than a maximum charging threshold, and
if the current charging scene is the first charging scene, the charging controller sends a key unlocking command, wherein the smart lock is unlocked by key, and a manual unlocking command as a current unlocking mode of the smart lock,
if the current charging scene is the second charging scene, the charging controller sends the key unlocking command and the manual unlocking command as the current unlocking mode of the smart lock if not full-charged and sends an automatic unlocking command as the current unlocking mode of the smart lock if full-charged, and
if the current charging scene is the second discharging scene or the first discharging scene, the charging controller sends the key unlocking command and manual unlocking command as the current unlocking mode of the smart lock; and
when the temperature detection module detects that the temperature of the charging port is higher than the maximum charging threshold, the charging controller sends the automatic unlocking command as the current unlocking mode of the smart lock.

2. The smart lock controlling method of the charging gun of the electric vehicle according to claim 1, wherein when the recognition module identifies and determines that the current charging state of the vehicle is in the first charging scene, the charging controller sends, an automatic locking command, a key locking command, wherein the smart lock is locked by key, and a secondary locking command which is defined as a locking command to lock the charging gun at the charging port if charging gun is still in the full- connected state within a predetermined time after an automatic unlocking, as a current locking mode of the smart lock, and when the recognition module identifies and determines that the current charging state of the vehicle is in the second charging scene or the second discharging scene, the charging controller sends an automatic locking command and a key locking command as the current locking mode of the smart lock.

3. A smart lock controlling device of a charging gun of an electric vehicle, comprising:
a charging controller, a recognition module, and a temperature detection module, wherein
the smart lock controlling device is adapted to perform the smart lock controlling method of claim 1, when the temperature detection module detects that the temperature of the charging port is lower than a maximum charging threshold, and if the current charging scene is the first charging scene, the charging controller sends a key unlocking command, wherein the smart lock is unlocked by key, and a manual unlocking command as a current unlocking mode of the smart lock, if the current charging scene is the second charging scene, the charging controller sends the key unlocking command and the manual unlocking command if not full-charged and sends an automatic unlocking command as the current unlocking mode of the smart lock if full-charged; and if the current charging scene is the second discharging scene or the first discharging scene, the charging controller sends the key unlocking command and manual unlocking command as the current unlocking mode of the smart lock; and
when the temperature detection module detects that the temperature of the charging port is higher than the maximum charging threshold, and the charging controller sends the automatic unlocking command as the current unlocking mode of the smart lock.

4. The smart lock controlling device of the charging gun of the electric vehicle according to claim 3, wherein the recognition module of the charging controller detects a state of the alternative current charging gun inserted into the charging port of the vehicle, if the state of the alternative current charging gun is connected, the charging gun charges the vehicle, and after the charging controller receives a full-charged signal, if the recognition module recognizes that the automatic unlocking function setting of the smart lock of the charging gun is a closed state, the current charging scene is determined as a first charging scene;the recognition module detects that the state of the alternative current charging gun is connected, and the automatic unlocking setting of the smart lock of the charging gun is in an open state after receiving the full-charged signal, and the current charging scene is determined as a second charging scene;the recognition module detects the state of the discharging gun when the alternative current charging gun is inserted into the charging port, if the state of the discharging gun is connected, the recognition module further determines the state of the driver door lock, if the state of the driver door lock is "unlocked", the current discharging scene is determined as a first discharging scene, or if the recognition module detects that the state of the discharging gun is connected and the state of the driver door lock is "locked", the recognition module determines a second discharging scene.

5. The smart lock controlling device of the charging gun of the electric vehicle according any of claim 3 to claim 4, wherein when the recognition module identifies and determines that the current charging state of the vehicle is in the first charging scene, the charging controller sends an automatic locking command, a key locking command, wherein the smart lock is locked by key, and a secondary locking command which is defined as a locking command to lock the charging gun at the charging port if charging gun is still in the full-connected state within a predetermined time after an automatic unlocking as a current locking mode of the smart lock, and when the recognition module identifies and determines that the current charging state of the vehicle is in the second charging scene or the second discharging scene, the charging controller sends the automatic locking command and the key locking command as the current locking mode of the smart lock.

6. An electronic device, comprising a processor and a memory, wherein the processor and the memory is adapted to perform the smart lock controlling method of the charging gun of the electric vehicle according to any one of claim 1 to claim 3.

7. A computer readable storage medium, stored with a computer program, wherein the computer program is capable of being loaded and run by the smart lock controlling device of claim 3 to execute the smart lock controlling method of the charging gun of the electric vehicle according to any one of claim 1 to claim 2.

## Patentansprüche

1. Verfahren zur Steuerung eines intelligenten Schlosses für eine Wechselstrom-Ladepistole eines Elektrofahrzeugs, umfassend:
Überwachen, über eine Ladesteuerung, eines Zustands der Wechselstrom-Ladepistole, eines Zustands einer Entladepistole des Elektrofahrzeugs, eines Batteriezustands einer Batterie des Elektrofahrzeugs und einer Einstellung der automatischen Entriegelungsfunktion und eines Zustands des Fahrertürschlosses in Echtzeit, wenn die Wechselstrom-Ladepistole in einen Ladeanschluss des Elektrofahrzeugs eingeführt wird,
Bestimmen, über ein Erkennungsmodul, einer aktuellen Ladeszene entsprechend dem Zustand der Wechselstrom-Ladepistole und der Einstellung der automatischen Entriegelungsfunktion eines intelligenten Schlosses der Wechselstrom-Ladepistole, nachdem die Batterie vollständig geladen ist,
Identifizieren und Bestimmen, über das Erkennungsmodul, einer aktuellen Entladungsszene entsprechend dem Zustand der Entladungspistole und dem Zustand des Fahrertürschlosses, und
Senden, über die Ladesteuerung, eines entsprechenden Entriegelungsmodus-Befehls an das intelligente Schloss der Wechselstrom-Ladepistole gemäß der aktuellen Ladungszene und der aktuellen Entladungsszene;
**dadurch gekennzeichnet dass** das Verfahren weiterhin Folgendes umfasst:
Erfassen, über ein Temperaturerfassungsmodul, einer aktuellen Temperatur des Ladeanschlusses oder eines Entladeanschlusses des Elektrofahrzeugs in Echtzeit, und
Senden, über die Ladesteuerung, eines entsprechenden Entriegelungsmodus-Befehls an das intelligente Schloss der Wechselstrom-Ladepistole gemäß der aktuellen Temperatur; wobei das Bestimmen der aktuellen Ladungszene umfasst:
Erkennen, über das Erkennungsmodul der Ladesteuerung, eines Zustands der in den Ladeanschluss des Fahrzeugs eingeführten Wechselstrom-Ladepistole, wobei,
wenn der Zustand der Wechselstrom-Ladepistole "vollständig angeschlossen" ist, was wie folgt definiert ist: wenn die Ladepistole in den Ladeanschluss eingeführt wird, erkennt die Ladesteuerung, dass die Ladepistole vollständig angeschlossen ist, und sendet einen automatischen Verriegelungsbefehl; die Ladepistole lädt das Fahrzeug auf, und nachdem die Ladesteuerung ein Voll-Lade-Signal empfängt, wenn das Erkennungsmodul erkennt, dass die Einstellung der automatischen Entriegelungsfunktion des intelligenten Schlosses der Wechselstrom-Ladepistole auf einen geschlossenen Zustand eingestellt ist, wird die aktuelle Ladungszene als eine erste Ladungszene bestimmt, und
wenn das Erkennungsmodul erkennt, dass der Zustand der Wechselstrom-Ladepistole "vollständig angeschlossen" ist, und die Einstellung der automatischen Entriegelungsfunktion des intelligenten Schlosses der Wechselstrom-Ladepistole nach dem Empfang des Voll-Lade-Signals in einem offenen Zustand ist, wird die aktuelle Ladungszene als eine zweite Ladungszene bestimmt;
Das Bestimmen der aktuellen Entladungsszene umfasst weiterhin:
Erkennen des Zustands der Entladepistole über das Erkennungsmodul, wenn die Wechselstrom-Ladepistole in den Ladeanschluss eingeführt wird,
wenn der Zustand der Entladepistole angeschlossen ist, weiteres Bestimmen des Zustands der Fahrertürverriegelung, wenn der Zustand der Fahrertürverriegelung "entriegelt" ist, wird die aktuelle Entladungsszene als eine erste Entladungsszene bestimmt, und
Wenn das Erkennungsmodul erkennt, dass der Zustand der Entladepistole angeschlossen ist und der Zustand der Fahrertürverriegelung "verriegelt" ist, wird die aktuelle Entladungsszene als zweite Entladungsszene bestimmt;
wenn das Temperaturerfassungsmodul feststellt, dass die Temperatur des Ladeanschlusses niedriger ist als ein maximaler Ladeschwellenwert, und
wenn die aktuelle Ladungszene die erste Ladungsszene ist, sendet die Ladesteuerung einen Schlüssel-Entriegelungsbefehl und einen manuellen Entriegelungsbefehl als einen aktuellen Entriegelungsmodus des intelligenten Schlosses, wobei das intelligente Schloss mit dem Schlüssel entriegelt wird,
wenn die aktuelle Ladungszene die zweite Ladungszene ist, sendet die Ladesteuerung den Schlüssel-Entriegelungsbefehl und den manuellen Entriegelungsbefehl als den aktuellen Entriegelungsmodus des intelligenten Schlosses, wenn es nicht voll geladen ist, und sendet einen automatischen Entriegelungsbefehl als den aktuellen Entriegelungsmodus des intelligenten Schlosses, wenn es voll geladen ist, und
wenn die aktuelle Entladungsszene die zweite Entladungsszene oder die erste Entladungsszene ist, sendet die Ladesteuerung den Schlüssel-Entriegelungsbefehl und den manuellen Entriegelungsbefehl als den aktuellen Entriegelungsmodus des intelligenten Schlosses; und
wenn das Temperaturerfassungsmodul erkennt, dass die Temperatur des Ladeanschlusses höher ist als der maximale Ladeschwellenwert, sendet die Ladesteuerung den automatischen Entriegelungsbefehl als den aktuellen Entriegelungsmodus des intelligenten Schlosses.

2. Verfahren zur Steuerung eines intelligenten Schlosses für eine Wechselstrom-Ladepistole eines Elektrofahrzeugs nach Anspruch 1, wobei die Ladesteuerung, wenn das Erkennungsmodul identifiziert und bestimmt, dass sich der aktuelle Ladezustand des Fahrzeugs in der ersten Ladungszene befindet, einen automatischen Verriegelungsbefehl, einen Schlüssel-Verriegelungsbefehl und einen sekundären Verriegelungsbefehl als einen aktuellen Verriegelungsmodus des intelligenten Schlosses sendet, wobei der sekundäre Verriegelungsbefehl als ein Verriegelungsbefehl definiert ist und verwendet wird, um die Ladepistole am Ladeanschluss zu verriegeln, wenn sich die Ladepistole innerhalb einer vorbestimmten Zeit nach einer automatischen Entriegelung immer noch im vollständig angeschlossenen Zustand befindet, und wobei, wenn das Erkennungsmodul identifiziert und bestimmt, dass sich der aktuelle Ladezustand des Fahrzeugs in der zweiten Ladungszene oder der zweiten Entladungszene befindet, die Ladesteuerung einen automatischen Verriegelungsbefehl und einen Schlüsselverriegelungsbefehl als den aktuellen Verriegelungsmodus des intelligenten Schlosses sendet.

3. Vorrichtung zur Steuerung eines intelligenten Schlosses für eine Ladepistole eines Elektrofahrzeugs, umfassend: eine Ladesteuerung, ein Erkennungsmodul und ein Temperaturerfassungsmodul, wobei die Vorrichtung zur Steuerung eines intelligenten Schlosses so ausgelegt ist, dass sie das Verfahren zur Steuerung des intelligenten Schlosses nach Anspruch 1 durchführt, wenn das Temperaturerfassungsmodul erkennt, dass die Temperatur des Ladeanschlusses niedriger als ein maximaler Ladeschwellenwert ist, und wenn die aktuelle Ladungszene die erste Ladungszene ist, sendet die Ladesteuerung einen Schlüssel-Entriegelungsbefehl, wobei das intelligente Schloss durch einen Schlüssel entriegelt wird, und einen manuellen Entriegelungsbefehl als einen aktuellen Entriegelungsmodus des intelligenten Schlosses bestimmt wird, wenn die aktuelle Ladungszene die zweite Ladungszene ist, sendet die Ladesteuerung den Schlüssel-Entriegelungsbefehl und den manuellen Entriegelungsbefehl, wenn es nicht voll geladen ist, und sendet einen automatischen Entriegelungsbefehl als den aktuellen Entriegelungsmodus des intelligenten Schlosses, wenn es voll geladen ist, und wenn die aktuelle Entladungsszene die zweite Entladungsszene oder die erste Entladungsszene ist, sendet die Ladesteuerung den Schlüssel-Entriegelungsbefehl und den manuellen Entriegelungsbefehl als den aktuellen Entriegelungsmodus des intelligenten Schlosses; und wenn das Temperaturerfassungsmodul erkennt, dass die Temperatur des Ladeanschlusses höher ist als der maximale Ladeschwellenwert, sendet die Ladesteuerung den automatischen Entriegelungsbefehl als den aktuellen Entriegelungsmodus des intelligenten Schlosses.

4. Vorrichtung zur Steuerung eines intelligenten Schlosses für eine Ladepistole eines Elektrofahrzeugs nach Anspruch 3, wobei das Erkennungsmodul der Ladesteuerung einen Zustand der in den Ladeanschluss des Fahrzeugs eingeführten Wechselstrom-Ladepistole erkennt, die Ladepistole das Fahrzeug auflädt, wenn der Zustand der Wechselstrom-Ladepistole angeschlossen ist, und die aktuelle Ladungszene als eine erste Ladungszene bestimmt wird, nachdem die Ladesteuerung ein Voll-Lade-Signal empfängt, wenn das Erkennungsmodul erkennt, dass die Einstellung der automatischen Entriegelungsfunktion des intelligenten Schlosses der Ladepistole ein geschlossener Zustand ist; das Erkennungsmodul erkennt, dass der Zustand der Wechselstrom-Ladepistole angeschlossen ist und die Einstellung der automatischen Entriegelungsfunktion des intelligenten Schlosses der Ladepistole in einem offenen Zustand ist, nachdem das Voll-Lade-Signal empfangen wurde, und die aktuelle Ladungszene wird als eine zweite Ladungszene bestimmt; das Erkennungsmodul erkennt den Zustand der Entladepistole, wenn die Wechselstrom-Ladepistole in den Ladeanschluss eingeführt wird, wenn der Zustand der Entladepistole angeschlossen ist, bestimmt das Erkennungsmodul außerdem den Zustand der Fahrertürverriegelung, wenn der Zustand der Fahrertürverriegelung "entriegelt" ist, wird die aktuelle Entladungsszene als erste Entladungsszene bestimmt, oder wenn das Erkennungsmodul erkennt, dass der Zustand der Entladepistole angeschlossen und der Zustand der Fahrertürverriegelung "verriegelt" ist, bestimmt das Erkennungsmodul eine zweite Entladeszene.

5. Vorrichtung zur Steuerung eines intelligenten Schlosses für eine Wechselstrom-Ladepistole eines Elektrofahrzeugs nach einem der Ansprüche 3 bis 4, wobei die Ladesteuerung, wenn das Erkennungsmodul identifiziert und bestimmt, dass sich der aktuelle Ladezustand des Fahrzeugs in der ersten Ladungszene befindet, einen automatischen Verriegelungsbefehl und einen Schlüssel-Verriegelungsbefehl sendt, wobei das intelligente Schloss mit dem Schlüssel verriegelt wird und einen sekundären Verriegelungsbefehl, der als ein Verriegelungsbefehl definiert ist und verwendet wird, um die Ladepistole am Ladeanschluss zu verriegeln, wenn sich die Ladepistole innerhalb einer vorbestimmten Zeit nach einer automatischen Entriegelung immer noch im vollständig angeschlossenen Zustand befindet, als einen aktuellen Verriegelungsmodus des intelligenten Schlosses bestimmt wird, und wenn das Erkennungsmodul identifiziert und bestimmt, dass sich der aktuelle Ladezustand des Fahrzeugs in der zweiten Ladungszene oder der zweiten Entladungszene befindet, sendet die Ladesteuerung einen automatischen Verriegelungsbefehl und einen Schlüsselverriegelungsbefehl als den aktuellen Verriegelungsmodus des intelligenten Schlosses.

6. Elektronische Vorrichtung, die einen Prozessor und einen Speicher umfasst, wobei der Prozessor und der Speicher geeignet sind, das Verfahren zur Steuerung des intelligenten Schlosses für eine Ladepistole des Elektrofahrzeugs gemäß einem der Ansprüche 1 bis 3 durchzuführen.

7. Computerlesbares Speichermedium, auf dem ein Computerprogramm gespeichert ist, wobei das Computerprogramm von der Vorrichtung zur Steuerung eines intelligenten Schlosses nach Anspruch 3 geladen und ausgeführt werden kann, um das Verfahren zur Steuerung des intelligenten Schlosses für eine Ladepistole des Elektrofahrzeugs gemäß einem der Ansprüche 1 bis 2 auszuführen.

## Revendications

1. Procédé de commande d'un verrou intelligent d'un pistolet de recharge en courant alternatif d'un véhicule électrique, comprenant :
le suivi, via un contrôleur de recharge, de l'état du pistolet de recharge en courant alternatif,
de l'état d'un pistolet de décharge du véhicule électrique, de l'état de la batterie d'un accumulateur du véhicule électrique et du paramètre de la fonction de déverrouillage automatique et de l'état de la serrure de porte du conducteur en temps réel lorsque le pistolet de recharge en courant alternatif est inséré dans un port de recharge du véhicule électrique, déterminer, via un module de reconnaissance, un scénario de recharge actuel en fonction de l'état du pistolet de recharge en courant alternatif et du paramètre de la fonction de déverrouillage automatique d'un verrou intelligent du pistolet de recharge en courant alternatif après que la batterie est complètement rechargée,
identifier et déterminer, via le module de reconnaissance, un scénario de décharge actuel en fonction de l'état du pistolet de décharge et de l'état de la serrure de porte du conducteur,
et envoyer, via le contrôleur de recharge, une commande de mode de déverrouillage correspondant au verrou intelligent du pistolet de recharge en courant alternatif en fonction du scénario de recharge actuel et du scénario de décharge actuel ;
**caractérisé en ce que** le procédé comprend en outre :
détecter, via un module de détection de température, une température actuelle du port de recharge ou du port de décharge du véhicule électrique en temps réel, et
envoyer, via le contrôleur de recharge, une commande de mode de déverrouillage correspondant au verrou intelligent du pistolet de recharge en courant alternatif en fonction de la température actuelle ; dans lequel
déterminer le scénario de recharge actuel comprend :
détecter, via le module de reconnaissance du contrôleur de recharge, un état du pistolet de recharge en courant alternatif inséré dans le port de recharge du véhicule, dans lequel,
si l'état du pistolet de recharge en courant alternatif est « Complètement connecté », ce qui est défini comme : lorsque le pistolet de recharge est inséré dans le port de recharge, le contrôleur de recharge reconnaît que le pistolet de recharge est complètement connecté et
envoie une commande de verrouillage automatique ; le pistolet de recharge charge le véhicule, et après que le contrôleur de recharge reçoit un signal de recharge complète, si le module de reconnaissance reconnaît que le paramètre de fonction de déverrouillage automatique du verrou intelligent du pistolet de recharge en courant alternatif est un état fermé, le scénario de recharge actuel est déterminé comme un premier scénario de recharge, et
si le module de reconnaissance détecte que l'état du pistolet de charge en courant alternatif est « Complètement connecté », et que le paramètre de la fonction de déverrouillage automatique du verrou intelligent du pistolet de charge en courant alternatif est en état ouvert après réception du signal de charge complète, le scénario de charge actuel est déterminé comme un deuxième scénario de charge ;
déterminer le scénario de décharge actuel comprend en outre :
détecter, via le module de reconnaissance, l'état du pistolet de décharge lorsque le pistolet de recharge en courant alternatif est inséré dans le port de recharge,
si l'état du pistolet de décharge est connecté, déterminer en outre l'état de la serrure de porte du conducteur, si l'état de la serrure de porte du conducteur est « Déverrouillée », le scénario de décharge actuel est déterminé comme un premier scénario de décharge, et
si le module de reconnaissance détecte que l'état du pistolet de décharge est connecté et que l'état de la serrure de porte du conducteur est « Verrouillée », le scénario de décharge actuel est déterminé comme un deuxième scénario de décharge ;
lorsque le module de détection de température détecte que la température du port de recharge est inférieure à un seuil de recharge maximal, et
si le scénario de recharge actuel est le premier scénario de recharge, le contrôleur de recharge envoie une commande de déverrouillage de clé, et une commande de déverrouillage manuel en tant que mode de déverrouillage actuel du verrou intelligent, où le verrou intelligent est déverrouillé par clé.
si le scénario de recharge actuel est le second scénario de recharge, le contrôleur de recharge envoie la commande de déverrouillage de clé et la commande de déverrouillage manuel en tant que mode de déverrouillage actuel du verrou intelligent s'il n'est pas complètement rechargé et envoie une commande de déverrouillage automatique en tant que mode de déverrouillage actuel du verrou intelligent s'il est complètement rechargé, et
si le scénario de décharge actuel est le deuxième scénario de décharge ou le premier scénario de décharge, le contrôleur de charge envoie la commande de déverrouillage de clé et la commande de déverrouillage manuel en tant que mode de déverrouillage actuel du verrou intelligent ; et
lorsque le module de détection de température détecte que la température du port de recharge est supérieure au seuil de charge maximal, le contrôleur de recharge envoie la commande de déverrouillage automatique en tant que mode de déverrouillage actuel du verrou intelligent.

2. Le procédé de contrôle du verrou intelligent de la lance de recharge de véhicule électrique selon la revendication 1, dans lequel lorsque le module de reconnaissance identifie et détermine que l'état de recharge actuel du véhicule est dans le premier scénario de recharge, le contrôleur de recharge envoie, une commande de verrouillage automatique, une commande de verrouillage par clé, où le verrou intelligent est verrouillé par clé, et une commande de verrouillage secondaire qui est définie comme une commande de verrouillage pour verrouiller la lance de recharge au port de recharge si la lance de recharge est toujours dans l'état de pleine connexion dans un temps prédéterminé après un déverrouillage automatique, en tant que mode de verrouillage actuel du verrou intelligent ,où le verrou intelligent est verrouillé par clé, et lorsque le module de reconnaissance identifie et détermine que l'état de recharge actuel du véhicule est dans le second scénario de recharge ou le second scénario de décharge, le contrôleur de charge envoie une commande de verrouillage automatique et une commande de verrouillage par clé en tant que mode de verrouillage actuel du verrou intelligent.

3. Un dispositif de contrôle de verrou intelligent d'une lance de recharge de véhicule électrique, comprenant : un contrôleur de recharge, un module de reconnaissance et un module de détection de température, le dispositif de contrôle de verrou intelligent étant adapté pour exécuter le procédé de contrôle du verrou intelligent selon la revendication 1, lorsque le module de détection de température détecte que la température du port de recharge est inférieure à un seuil de charge maximal, et si le scénario de recharge actuel est le premier scénario de recharge, le contrôleur de recharge envoie une commande de déverrouillage de clé, où le verrou intelligent est déverrouillé par clé, et une commande de déverrouillage manuel en tant que mode de déverrouillage actuel du verrou intelligent, si le scénario de recharge actuel est le second scénario de recharge, le contrôleur de recharge envoie la commande de déverrouillage de clé et la commande de déverrouillage manuel si le recharge n'est pas complète et envoie une commande de déverrouillage automatique en tant que mode de déverrouillage actuel du verrou intelligent si le recharge est complète ; et si le scénario de recharge actuel est le second scénario de décharge ou le premier scénario de décharge, le contrôleur de recharge envoie la commande de déverrouillage de clé et la commande de déverrouillage manuel en tant que mode de déverrouillage actuel du verrou intelligent ; et lorsque le module de détection de température détecte que la température du port de recharge est supérieure au seuil de recharge maximal, et le contrôleur de recharge envoie la commande de déverrouillage automatique en tant que mode de déverrouillage actuel du verrou intelligent.

4. Le dispositif de contrôle de verrou intelligent de la lance de recharge du véhicule électrique selon la revendication 3, dans lequel le module de reconnaissance du contrôleur de recharge détecte l'état de la lance de recharge alternative connectée au port de recharge du véhicule, si l'état de la lance de recharge alternative est connectée, la lance de recharge charge le véhicule, et après que le contrôleur de charge ait reçu un signal de recharge complète, si le module de reconnaissance reconnaît que le paramètre de la fonction de déverrouillage automatique du verrou intelligent de la lance de recharge est à l'état fermé, le scénario de recharge actuel est déterminé en tant que premier scénario de recharge ; le module de reconnaissance détecte que l'état de la lance de recharge alternative est connectée, et le paramètre de la fonction de déverrouillage automatique du verrou intelligent de la lance de recharge est à l'état ouvert après avoir reçu le signal de recharge complète, et le scénario de recharge actuel est déterminé en tant que second scénario de recharge ; le module de reconnaissance détecte l'état de la lance de décharge lorsque la lance de recharge alternative est insérée dans le port de recharge, si l'état de la lance de décharge est connecté, le module de reconnaissance détermine en outre l'état de la serrure de porte du conducteur, si l'état de la serrure de porte du conducteur est « Déverrouillée », le scénario de décharge actuel est déterminé en tant que premier scénario de décharge, ou si le module de reconnaissance détecte que l'état de la lance de décharge est connectée et l'état de la serrure de porte du conducteur est « Verrouillée », le module de reconnaissance détermine un second scénario de décharge.

5. Le procédé de contrôle du verrou intelligent de la lance de recharge de véhicule électrique selon l'une quelconque des revendications 3 à 4, dans lequel lorsque le module de reconnaissance identifie et détermine que l'état de recharge actuel du véhicule est dans le premier scénario de recharge, le contrôleur de recharge envoie, une commande de verrouillage automatique, une commande de verrouillage par clé, où le verrou intelligent est verrouillé par clé, et une commande de verrouillage secondaire qui est définie comme une commande de verrouillage pour verrouiller la lance de recharge au port de recharge si la lance de recharge est toujours dans l'état de pleine connexion dans un temps prédéterminé après un déverrouillage automatique, en tant que mode de verrouillage actuel du verrou intelligent, et lorsque le module de reconnaissance identifie et détermine que l'état de recharge actuel du véhicule est dans le second scénario de recharge ou le second scénario de décharge, le contrôleur de recharge envoie une commande de verrouillage automatique et une commande de verrouillage par clé en tant que mode de verrouillage actuel du verrou intelligent.

6. Un dispositif électronique, comprenant un processeur et une mémoire, où le processeur et la mémoire sont adaptés pour exécuter le procédé de contrôle de verrouillage intelligent de la lance de recharge d'un véhicule électrique selon l'une quelconque des revendications 1 à 3.

7. Un support de stockage lisible par ordinateur, stocké avec un programme informatique, où le programme informatique peut être chargé et exécuté par le dispositif de contrôle de verrouillage intelligent de la revendication 3 pour exécuter le procédé de contrôle de verrouillage intelligent de la lance de recharge d'un véhicule électrique selon l'une quelconque des revendications 1 à 2.
